(19) Europäisches Patentamt
European Patent Office
Office européen des brevets

(11) EP 2 562 737 A2

(12) EUROPEAN PATENT APPLICATION

(43) Date of publication:
27.02.2013 Bulletin 2013/09

(51) Int Cl.:
G09F 3/02 (2006.01)      G09F 3/10 (2006.01)

(21) Application number: 12180199.7

(22) Date of filing: 13.08.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.08.2011 JP 2011184376

(71) Applicant: Seiko Instruments Inc.
Chiba-shi, Chiba (JP)

(72) Inventors:
• Tani, Kazuo
Chiba-shi,, Chiba (JP)
• Sato, Yoshinori
Chiba-shi,, Chiba (JP)
• Sanbongi, Norimitsu
Chiba-shi,, Chiba (JP)

(74) Representative: Miller Sturt Kenyon
9 John Street
London WC1N 2ES (GB)

(54) **Pressure-sensitive adhesive label and label issuing device**

(57)    Provided is a pressure-sensitive adhesive label (1), which does not use release paper to save resources and alleviate an environmental burden and which can be formed thin so that the a pressure-sensitive adhesive label (1) can be rolled into an elongated roll. The pressure-sensitive adhesive label (1) includes an indication layer (2), a pressure-sensitive adhesive layer (3) placed on the indication layer (2), and a functional layer (4) placed on the pressure-sensitive adhesive layer (3). The functional layer (4) is openable by heating to expose the pressure-sensitive adhesive layer (3). Consequently, the functional layer (4) can be opened stably with low activation energy, and hence the pressure-sensitive adhesive label (1) is suitable for a portable label issuing device.

Fig.1

EP 2 562 737 A2

**Description**

The present invention relates to a pressure-sensitive adhesive label that has non-pressure-sensitive adhesiveness at a time of storage and is allowed to exhibit pressure-sensitive adhesiveness at a time of use.

In recent years, pressure-sensitive adhesive labels have been used for a price indication label, a product indication label, an advertisement label, a seal label for a package, and the like. As a method of recording on a recording surface of the pressure-sensitive adhesive label, various methods such as an inkjet recording method and a thermosensitive recording method are applied.

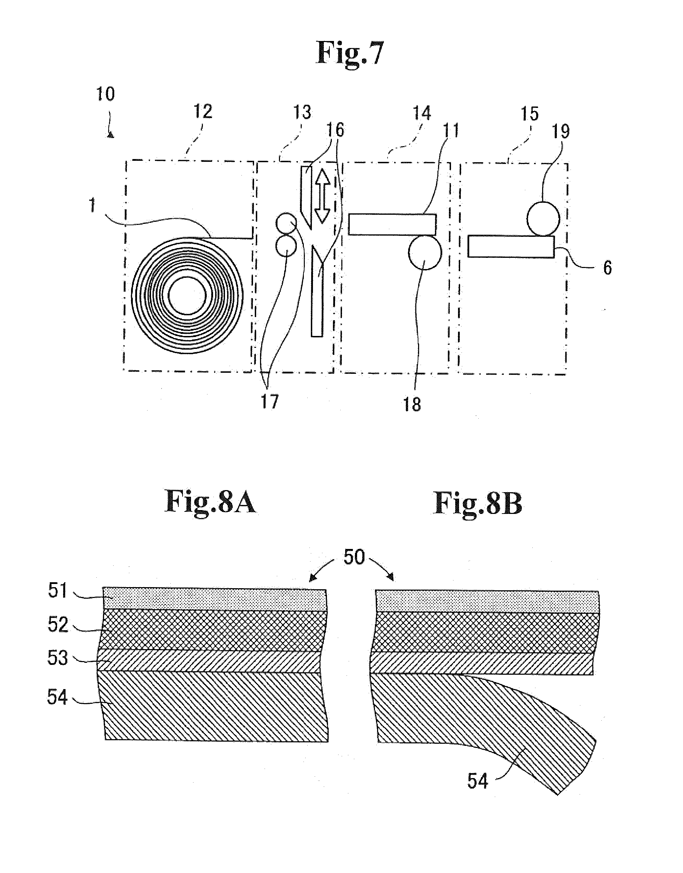

FIGS. 8A and 8B are cross-sectional views of a conventional pressure-sensitive adhesive label. FIG. 8A illustrates a state of the pressure-sensitive adhesive label before use, and FIG. 8B illustrates a state of the pressure-sensitive adhesive label in use. A pressure-sensitive adhesive label 50 has a configuration in which an indication layer 51 for recording characters or the like, a base 52, a pressure-sensitive adhesive layer 53 for allowing the pressure-sensitive adhesive label 50 to adhere under pressure to an adherend, and release paper 54 are laminated. The indication layer 51 and the pressure-sensitive adhesive layer 53 are supported by the base 52. The release paper 54 is peeled off at a time of use to expose the pressure-sensitive adhesive layer 53, and then the pressure-sensitive adhesive label 50 is adhered under pressure to an adherend. More specifically, the use of the release paper 54 is finished after the release paper 54 is peeled off in the conventional pressure-sensitive adhesive label 50, and the release paper 54 is disposed of as waste. Therefore, there is a demand for a pressure-sensitive adhesive label that does not create waste of release paper 54 from the viewpoint of resource saving and alleviation of an environmental burden.

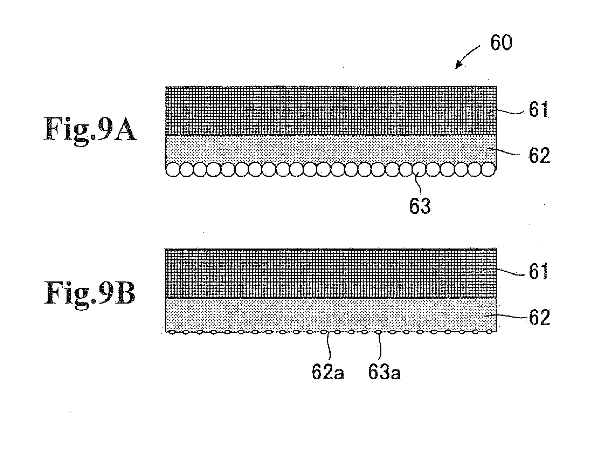

In order to solve the above-mentioned problem, a label that does not use release paper has also been proposed. FIGS. 9A and 9B are side views of a thermosensitive pressure-sensitive adhesive member 60 described in Japanese Patent Application Laid-open No. Hei 09-111203. More specifically, as illustrated in FIG. 9A, the thermosensitive pressure-sensitive adhesive member 60 has a configuration in which a pressure-sensitive adhesive layer 62 is provided under a base sheet 61, and a microcapsule layer 63 is provided so as to cover the pressure-sensitive adhesive surface of the pressure-sensitive adhesive layer 62. The microcapsule layer 63 has no pressure-sensitive adhesiveness, and hence release paper is not required. The microcapsule layer 63 is a substantially single layer of hollow microcapsules and has a melting point of, for example, about 100°C to 180°C. When the microcapsule layer 63 is heated to this temperature, the microcapsule layer 63 is broken, and the volume thereof is reduced (63a). Consequently, a pressure-sensitive adhesive surface 62a of the pressure-sensitive adhesive layer 62 is exposed to exhibit pressure-sensitive adhesiveness.

However, in the thermosensitive pressure-sensitive adhesive member 60 of Japanese Patent Application Laid-open No. Hei 09-111203, the microcapsule layer 63 has a spherical shape. Therefore, when the microcapsule layer 63 comes into contact with a heat source, the microcapsule layer 63 comes into point contact with the heat source, and hence, heat conductivity is low and large heat energy is required for breaking the microcapsule layer 63. Therefore, the thermosensitive pressure-sensitive adhesive member 60 is not suitable for label issuance with low power consumption, which does not result in alleviation of an environmental burden. Further, the conventional pressure-sensitive adhesive label is thick and bulky due to its configuration in which the indication layer and the thermosensitive pressure-sensitive adhesive layer are formed on the base sheet.

Further, the pressure-sensitive adhesive label is used for various adherends under various environments. Therefore, it is expected that pressure-sensitive adhesive strength and a pressure-sensitive adhesive region of the pressure-sensitive adhesive label be controllable in accordance with the use environment, the properties of an adherend, and the purpose of use.

According to an exemplary embodiment of the present invention, there is provided a pressure-sensitive adhesive label, including: an indication layer; a pressure-sensitive adhesive layer placed on the indication layer; and a functional layer placed on the pressure-sensitive adhesive layer so as to cover a surface of the pressure-sensitive adhesive layer. The functional layer is openable by heating to expose the pressure-sensitive adhesive layer.

Further, the functional layer is made of an olefin-based resin.

Further, the functional layer contains an inorganic filler.

Further, the functional layer includes a porous layer.

Further, a low pressure-sensitive adhesive layer is provided between the pressure-sensitive adhesive layer and the functional layer.

Further, the indication layer includes a thermosensitive color-developing layer.

Further, a protective film is formed on the indication layer.

According to an exemplary embodiment of the present invention, there is provided a label issuing device, including: a conveying part for conveying a pressure-sensitive adhesive label including an indication layer, a pressure-sensitive adhesive layer placed on the indication layer, and a functional layer placed on the pressure-sensitive adhesive layer; a recording part for performing recording on the indication layer; and a heating part for opening the functional layer by heating to expose the pressure-sensitive adhesive layer.

The pressure-sensitive adhesive label according to the present invention includes the indication layer, the pressure-sensitive adhesive layer placed on the indication layer, and the functional layer placed on the pressure-sensitive adhesive layer. The functional layer is openable by heating to expose the pressure-sensitive adhesive layer. With this configuration using no release paper, it is possible to eliminate time and labor for disposing of waste of release paper used in a general pressure-sensitive adhesive label. In addition, the pressure-sensitive adhesive label according to the present invention is excellent in terms of resource saving and alleviation of an environmental burden. Further, the functional layer is a non-pressure-sensitive adhesive layer having an anti-blocking property. Therefore, the pressure-sensitive adhesive label can be rolled into a roll shape and stored in that state, and can be rolled into an elongated roll due to its small thickness.

Embodiments of the present invention will now be described by way of further example only and with reference to the accompanying drawings, in which:

    FIG. 1 is a schematic vertical cross-sectional view of a pressure-sensitive adhesive label according to a first embodiment of the present invention;
    FIGS. 2A to 2D are explanatory views illustrating a state in which the pressure-sensitive adhesive label according to the first embodiment of the present invention exhibits pressure-sensitive adhesiveness;
    FIGS. 3A and 3B are schematic plan views illustrating examples of openings formed in a functional layer of the pressure-sensitive adhesive label according to the first embodiment of the present invention;
    FIG. 4 is a schematic vertical cross-sectional view of a pressure-sensitive adhesive label according to a second embodiment of the present invention;
    FIGS. 5A to 5D are explanatory views illustrating a state in which the pressure-sensitive adhesive label according to the second embodiment of the present invention exhibits pressure-sensitive adhesiveness;
    FIG. 6 is a schematic vertical cross-sectional view of a pressure-sensitive adhesive label according to a fourth embodiment of the present invention;
    FIG. 7 is a schematic structural view of a label issuing device according to a fifth embodiment of the present invention;
    FIGS. 8A and 8B are cross-sectional views of a conventionally known pressure-sensitive adhesive label; and
    FIGS. 9A and 9B are side views of a conventionally known thermosensitive pressure-sensitive adhesive member.

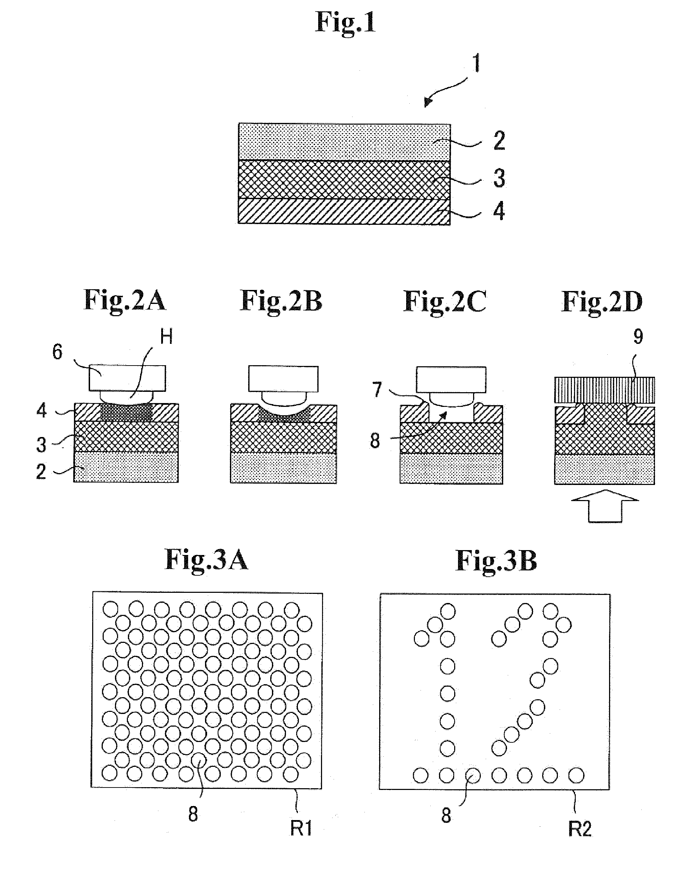

FIG. 1 is a schematic vertical cross-sectional view of a pressure-sensitive adhesive label 1 according to a first embodiment of the present invention. The pressure-sensitive adhesive label 1 has a configuration in which an indication layer 2, a pressure-sensitive adhesive layer 3, and a functional layer 4 are laminated. The pressure-sensitive adhesive label 1 of the present invention is allowed to exhibit pressure-sensitive adhesiveness by opening the functional layer 4 by heating to expose the pressure-sensitive adhesive layer 3. The functional layer 4 has non-pressure-sensitive adhesiveness and does not cause blocking even when the pressure-sensitive adhesive label 1 is stacked or rolled into a roll shape for storage. The indication layer 2 is provided so as to indicate characters, graphics, and the like thereon. For example, through use of a label issuing device, characters, graphics, and the like can be printed on the indication layer, and a particular portion of the functional layer 4 is opened by heating. Thus, the pressure-sensitive adhesive label 1 in which a part of the pressure-sensitive adhesive layer 3 is exposed can be issued.

When the functional layer 4 is molten by heating, an opening is formed through increase in diameter thereof due to the surface tension of a molten material. In this case, the material flows to an end of the opening to aggregate. As the functional layer 4, any layer that has high controllability by heat and can support the pressure-sensitive adhesive layer 3 and the indication layer 2 can be used. As the functional layer 4, a plastic material, for example, olefin-based resin can be used.

FIGS. 2A to 2D are explanatory views illustrating a state in which the pressure-sensitive adhesive label 1 according to the first embodiment of the present invention exhibits pressure-sensitive adhesiveness. A thermal head 6 is used as heating means. As illustrated in FIG. 2A, the heating part H of the thermal head 6 is brought into contact with the functional layer 4 of the pressure-sensitive adhesive label 1. Then, as illustrated in FIG. 2B, the heated functional layer 4 starts being melted, and an opening 8 is formed in the functional layer 4 as illustrated in FIG. 2C. Simultaneously with the formation of the opening 8, a convex part 7 higher than the surface of the functional layer 4 is formed on the periphery of the opening 8, and the underlying pressure-sensitive adhesive layer 3 is exposed. Then, as illustrated in FIG. 2D, when the pressure-sensitive adhesive label 1 is pressed from the bottom side of the indication layer 2, a pressure-sensitive adhesive adheres under pressure to an adherend 9 through the opening 8. The indication layer 2 can be printed before or after the illustration of FIGS. 2A to 2D and the pressure-sensitive adhesive label 1 can be used as a label.

FIGS. 3A and 3B are schematic plan views illustrating examples of the openings 8 formed in the functional layer 4 of the pressure-sensitive adhesive label 1 according to the first embodiment of the present invention. FIG. 3A illustrates a state in which a large number of openings 8 are formed so as to be aligned in a region R1 of the functional layer 4 by using the thermal head 6. FIG. 3B illustrates a state in which characters "12" are drawn in a region R2 of the functional layer 4 by using the thermal head 6.

As illustrated in FIG. 3A, when the large number of openings 8 are formed in the functional layer 4, the pressure-sensitive adhesive layer 3 is exposed through the openings 8, and hence the pressure-sensitive adhesive label 1 can be adhered under pressure to the adherend 9. In this case, the functional layer 4 is allowed to function as a support for supporting the pressure-sensitive adhesive layer 3 and the indication layer 2 by controlling the formation of the openings 8 so that a plurality of the openings 8 are not continuous to one another. Further, the formation density and formation positions of the openings 8 are controlled in accordance with the surface state of the adherend 9 and the use environment of the pressure-sensitive adhesive label 1, and hence pressure-sensitive adhesiveness can be exhibited in accordance with an adherend surface and use environment.

Further, as illustrated in FIG. 3B, characters and graphics can be indicated through use of the openings 8 formed in the functional layer 4. When the pressure-sensitive adhesive label 1 is adhered under pressure to the transparent adherend 9, the characters and graphics printed on the indication layer 2 of the pressure-sensitive adhesive label 1 are indicated on the adherend 9 on the pressure-sensitive adhesive label 1 side, and the characters and graphics formed through use of openings 8 in the functional layer 4 are indicated on the adherend 9 on the side opposite to the pressure-sensitive adhesive label 1. More specifically, double-sided indication can be performed through use of the pressure-sensitive adhesive label 1. When the pressure-sensitive adhesive layer 3 is colored in white or another color, a wide variety of indication can be performed on the adherend 9 on the side opposite to the pressure-sensitive adhesive label 1.

Here, as the pressure-sensitive adhesive layer 3, a pressure-sensitive adhesive can be used. The pressure-sensitive adhesive can adhere to an adherend merely by applying a small pressure at room temperature without using water, a solvent, or heat. Further, the pressure-sensitive adhesive adheres to an adherend strongly due to its cohesion force and elasticity, and can also be peeled off from a hard smooth surface. Specifically, a silicone-based pressure-sensitive adhesive, a rubber-based pressure-sensitive adhesive, or an acrylic pressure-sensitive adhesive can be used depending upon its intended use. The silicone-based pressure-sensitive adhesive includes silicone having a high cohesion force and silicone having a high pressure-sensitive adhesive strength. The rubber-based pressure-sensitive adhesive includes natural rubber, styrene-butadiene rubber (SBR), polyisobutylene, and a rubber-based material. The acrylic pressure-sensitive adhesive includes a cross-linking material using a monomer with a low glass transition point and a cross-linking agent, and a non-cross-linking material obtained by copolymerizing a monomer with a low glass transition point and a monomer with a high glass transition point.

As the functional layer 4, an olefin-based resin or an engineering plastic can be used. The olefin-based resin is used for many purposes as a general-purpose resin, and hence, can form the functional layer 4 at low cost. As the olefin-based resin, polyethylene (PE), polyvinyl chloride (PVC), polypropylene (PP), a multi-layer polyolefin-based resin in which PE and PP are stacked, polystyrene (PS), and polyethylene terephthalate (PET) can be used. As the olefin-based resin, a homopolymer, a copolymer, or a multistage polymer can be used. Polyolefin selected from the group consisting of the homopolymer, the copolymer, and the multistage polymer can also be used alone or in combination. Typical examples of the above-mentioned polymers include low-density polyethylene, linear low-density polyethylene, medium-density polyethylene, high-density polyethylene, ultrahigh molecular weight polyethylene, isotactic polypropylene, atactic polypropylene, polybutene, and ethylene propylene rubber.

Further, as the functional layer 4, a hybrid that is a stack type of PS and PET, an ethylene/vinyl acetate copolymer (EVA) based resin, a polyvinyl alcohol (PVA) based resin, a polylactic acid (PLA) based resin that is a plant-based material, and the like can be used. Further, a cellulose-based material that can be expected to lower the cost can be used. It is preferred to select a material whose contact angle with the pressure-sensitive adhesive layer 3 to be adjacent to the functional layer 4 increases during heating. Further, a uniaxially stretched or biaxially stretched material which uses a stretching process can be used for forming the functional layer 4. In the case of using a stretched film, there can be used a material which is stabilized chemically and mechanically by manipulating a glass transition point by copolymerizing a single monomer with another monomer or blending different kinds of components such as rubber.

The viscosity average molecular weight of the olefin-based resin is preferably 50,000 to 12,000,000, more preferably 50,000 to less than 2,000,000, most preferably 100,000 to less than 1,000,000. If the viscosity average molecular weight is 50,000 or more, the melt-tension at a time of melt molding becomes large to enhance moldability, which provides sufficient entanglement and tends to give high strength. If the viscosity average molecular weight is 12,000,000 or less, particularly, thickness stability is excellent.

It is preferred that the functional layer 4 have a small heat capacity. More specifically, in the case where the heat capacity of the functional layer 4 is smaller than that of the pressure-sensitive adhesive layer 3, when the functional layer 4 is heated, the rise in temperature and melting of the functional layer 4 are facilitated, and the pressure-sensitive adhesive layer 3 can be prevented from being deformed or denatured due to heat.

As the indication layer 2, a thermosensitive color-developing layer that develops color by heating can be used. For example, a thermosensitive recording layer coating solution is prepared by mixing a leuco dye with a developer that allows the leuco dye to develop color, and is applied to the indication layer 2. A recording layer capable of recording by an inkjet recording apparatus may be used in place of the thermosensitive color-developing layer.

Next, a method of producing the pressure-sensitive adhesive label 1 is described. The pressure-sensitive adhesive label 1 is produced in the following manner. The functional layer 4 coated with a pressure-sensitive adhesive is attached to the indication layer 2, or the indication layer 2 coated with the pressure-sensitive adhesive layer 3 is attached to the functional layer 4. A coextrusion procedure can be used for the attachment. As a device for coating the functional layer 4 or the indication layer 2 with a pressure-sensitive adhesive, a bar coater, an airknife coater, a squeeze coater, a gravure coater, or the like can be used. At a time of coating, film viscosity, film thickness, and a drying process are selected appropriately. A plurality of layers of the indication layer 2, the pressure-sensitive adhesive layer 3, and the functional layer 4 are attached, and hence a residual stress based on the thermal contraction and moisture absorption acts. The dimension stability, flatness of a surface, moisture resistance, solvent resistance, mechanical strength, friction coefficient of a surface, and flexibility at a time of contact with a heat source of the pressure-sensitive adhesive label 1 are to be noted.

Next, the exhibition of pressure-sensitive adhesive strength is described. The pressure-sensitive adhesive strength of the pressure-sensitive adhesive label 1 is exhibited when a pressure-sensitive adhesive comes into contact with the surface of the adherend 9 through the openings 8. Here, a volume amount Q per unit time of the pressure-sensitive adhesive that flows out through the openings 8 is expressed as follows:

$$Q = 4\pi Pa/(8L\eta_0)$$

where P represents a pressure to be applied to the adherend, a represents a radius of the opening 8, L represents a depth of the opening 8 (depth of the convex part 7 from a peak portion thereof to the boundary between the functional layer 4 and the pressure-sensitive adhesive layer 3), and $\eta_0$ represents the viscosity of the pressure-sensitive adhesive. It is understood from the expression that, as the viscosity $\eta_0$ is larger and the depth L of the opening 8 is larger, the amount of the pressure-sensitive adhesive that flows out through the openings 8 becomes smaller. Thus, it is necessary to select the thickness of the functional layer 4 and the viscosity of the pressure-sensitive adhesive appropriately. In the pressure-sensitive adhesive label 1 of the present invention, the radius a of the opening 8 can be controlled with high precision, and hence, the controllability of the amount of the pressure-sensitive adhesive that flows out through the openings 8 is enhanced, and predetermined pressure-sensitive adhesive strength can be exhibited stably.

As described above, release paper is not discharged at a time of use. Therefore, time and labor for disposing of waste of release paper can be saved, and the pressure-sensitive adhesive label is excellent in terms of resource saving and alleviation of an environmental burden. Further, the functional layer is non-pressure-sensitive adhesive, and hence, the functional layer has an anti-blocking property. Further, the functional layer functions as a support for supporting the pressure-sensitive adhesive layer and the indication layer. Thus, the thickness of the pressure-sensitive adhesive label can be reduced, which enables the pressure-sensitive adhesive label to be rolled into an elongated roll. Further, the pressure-sensitive adhesive strength and pressure-sensitive adhesive region of the pressure-sensitive adhesive label can be controlled in accordance with the use environment, the properties of an adherend, and the purpose of use.

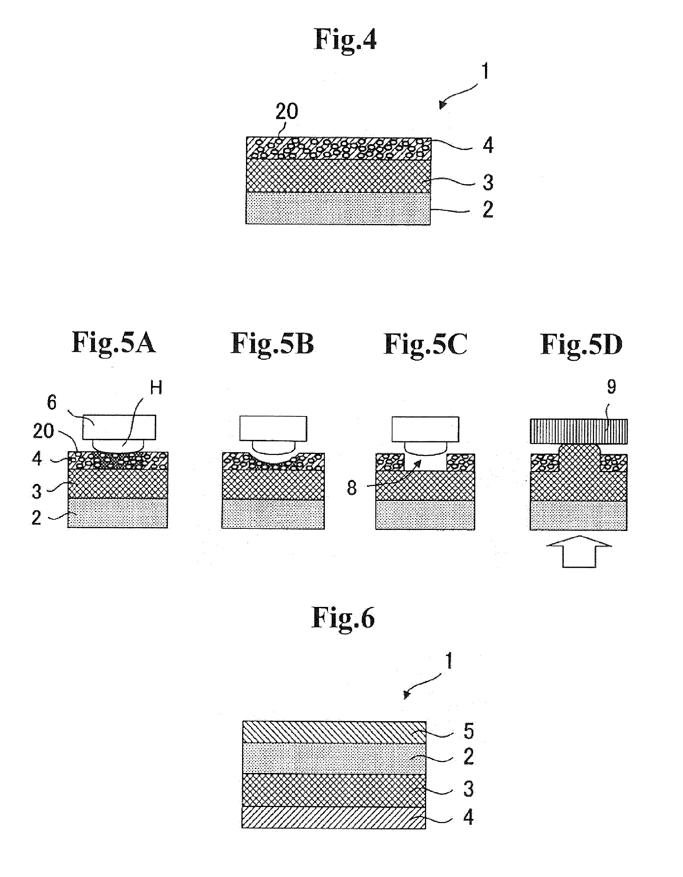

FIG. 4 is a schematic cross-sectional view of a pressure-sensitive adhesive label 1 according to a second embodiment of the present invention. The pressure-sensitive adhesive label 1 according to the second embodiment of the present invention includes a functional layer 4 which is a porous layer. The functional layer 4 has a heat capacity smaller than that of a layer made of the same material with the same thickness which is not porous. Therefore, the functional layer 4 can be opened with heat energy smaller than that of the layer made of the same material with the same thickness which is not porous. The functional layer 4 is molten by heating and opened due to surface tension. The functional layer 4 has a density of a material smaller than that of the layer made of the same material which is not porous. Further, a large number of holes 20 are formed in the surface of the functional layer 4. Therefore, the contact area between the functional layer 4 and the pressure-sensitive adhesive layer 3 becomes smaller than that of the layer made of the same material which is not porous. Consequently, the pressure-sensitive adhesion function of the pressure-sensitive adhesive layer 3 that prevents opening of the function layer 4 becomes low.

The functional layer 4 includes a large number of hollow regions therein, and hence, has heat diffusion lower than that of the layer made of the same material which is not porous, and heat does not easily spread in a planar direction. Therefore, the opening 8 does not easily extend to a portion outside of a region with which a heating part H comes into contact. Thus, the porous material can exhibit pressure-sensitive adhesiveness with high sensitivity, compared with the non-porous material, and the position and shape of the opening 8 can be controlled with high precision.

It is preferred that the functional layer 4 have a porosity of 30% to 85%, and an average hole diameter be 0.01 $\mu$m to 10 $\mu$m. The thickness of the functional layer 4 can be set to be 1 $\mu$m to 30 $\mu$m. It is preferred that the average hole diameter of the holes be set to be smaller than the thickness of the functional layer 4 so that through-holes are not formed. The thickness of the functional layer 4 is preferably set to be 30 $\mu$m or less. Thus, the heat capacity of the functional layer 4 decreases, and the functional layer can be opened with low heat energy. The pressure-sensitive adhesive label 1 according to the second embodiment of the present invention is protected with the thickness of the opened functional layer 4 so that the heating part H and the pressure-sensitive adhesive layer 3 do not come into direct contact with each other. Consequently, when the pressure-sensitive adhesive label 1 is moved relatively to the heating part H, a pressure-sensitive adhesive does not adhere to the heating part H, and conveyability of the pressure-sensitive adhesive label 1 can be ensured. The temperature at which the functional layer 4 is opened by heating is set to be about 100°C to 200°C depending upon the material properties of the functional layer 4. This enables the energy saving of the device and the high sensitivity of the pressure-sensitive adhesive label. Further, the heat capacity per unit area of the functional layer 4 is set to be smaller than that of the pressure-sensitive adhesive layer 3. Thus, the rise in temperature of the pressure-sensitive adhesive layer 3 is suppressed, and the pressure-sensitive adhesive layer 3 can be prevented from being deformed or denatured due to heat.

FIGS. 5A to 5D are explanatory views illustrating a state in which the pressure-sensitive adhesive label 1 in this embodiment exhibits pressure-sensitive adhesiveness. As illustrated in FIG. 5A, the heating part H of a thermal head 6 is brought into contact with the functional layer 4 of the pressure-sensitive adhesive label 1. Then, as illustrated in FIG. 5B, the heated functional layer 4 starts being molten, and as illustrated in FIG. 5C, the opening 8 is formed in the functional layer 4 and the underlying pressure-sensitive adhesive layer 3 is exposed. As illustrated in FIG. 5D, when the pressure-sensitive adhesive label 1 is pressed from the bottom side of the indication layer 2, a pressure-sensitive adhesive adheres under pressure to an adherend 9 through the opening 8. In this case, the opening 8 is formed more speedily through use of the functional layer 4 having the holes 20, compared with the case where there are no holes 20. The convex part 7 may or may not be formed.

A third embodiment of the present invention is the same as the first embodiment except that an inorganic filler is mixed in the functional layer 4.

In the third embodiment, the functional layer 4 contains an inorganic filler. A resin material is used as a base material, and the inorganic filler is added to the resin material. Thus, heat conductivity is increased, and melting and flowing of the resin material are facilitated. On the other hand, the pressure-sensitive adhesive layer 3 uses its pressure-sensitive adhesive strength to suppress increase in diameter of an opening that may be formed in the resin material. The pressure-sensitive adhesive strength of the pressure-sensitive adhesive layer 3 decreases with an increase in temperature, and the effect of suppressing the increase in diameter of the opening 8 is reduced due to the addition of the inorganic filler to the functional layer 4. Thus, it is necessary to raise the temperature of the functional layer 4 in order to reduce a pressure-sensitive adhesion function of the pressure-sensitive adhesive layer 3, and it is necessary to reduce temperature unevenness of the functional layer 4 in an opening region thereof to heat the functional layer 4 uniformly in order to stably form the opening 8 into a required shape.

A type of the inorganic filler is not particularly limited. For example, an oxide-based ceramics such as alumina, silica, titania, zirconia, magnesia, yttria, zinc oxide, and iron oxide, a nitride-based ceramics such as silicon nitride, titanium nitride, and boron nitride, a ceramics such as silicon carbide, calcium carbonate, aluminum sulfate, aluminum hydroxide, potassium titanate, tarc, kaolin clay, kaolinite, halloysite, pyrophyllite, montmorillonite, sericite, mica, amesite, bentonite, asbestos, zeolite, calcium silicate, magnesium silicate, diatomous earth, and silica sand, glass fibers or the like can be used alone or as a mixture of two or more kinds. For example, a filler made of boron nitride, silicon carbide, and aluminum nitride shows 5 to 40 times higher a thermal conductivity than an oxide filler. Further, by adding an oxide filler such as alumina and silica for the resin material, the thermal conductivity can be increased by one or more orders of magnitude.

Herein, the functional layer 4 contains the inorganic filler in an amount of 10% by volume to 90% by volume. When the amount of the inorganic filler is less than 10% by volume, the heat conductivity of the resin material becomes dominant, and heat conduction proportional to a ratio between the resin material and the inorganic material is not provided. Thus, the effect of enhancing heat conductivity is small. When the amount exceeds 90% by volume, physical properties of the functional layer 4 vary significantly. The inorganic filler of the functional layer 4 is preferably set to be 20% by volume to 60% by volume. If required, a material for adjusting physical properties such as a plasticizer can be added to the functional layer 4. Further, the shape of the inorganic filler may be a plate shape or a spherical shape, and is not particularly limited. However, a spherical particle shape is preferred to a non-spherical particle shape in consideration of the variation of physical properties and dispersibility.

As in the first embodiment, it is preferred that the heat capacity per unit area of the functional layer 4 be smaller than that of the pressure-sensitive adhesive layer 3. More specifically, by setting the heat capacity of the functional layer 4 to be smaller than that of the pressure-sensitive adhesive layer 3, the rise in temperature of the pressure-sensitive adhesive layer 3 is suppressed when the functional layer 4 is heated, and the pressure-sensitive adhesive layer 3 can be prevented from being deformed or denatured due to heat.

The heat conductivity of the inorganic material is higher than that of the resin material. For example, the heat conductivity of a polymer material is 0.1 W/(m°C) to 0.5 W/(m°C), whereas the heat conductivity of an inorganic material is higher than that of the polymer material by one or more orders of magnitude. Therefore, the heat conductivity of the functional layer 4 is enhanced, and the temperature can be raised speedily over the entire thickness of the heated region of the functional layer 4. This enables the functional layer 4 to be opened stably with high sensitivity, and the position and area of the exposed region of the pressure-sensitive adhesive layer 3 can be controlled with high precision. Further, due to the thickness of the opened functional layer 4 itself, or due to the formation of the convex portion 7 in which the periphery of the opening 8 is higher than the surface of the functional layer 4, the heating part and the pressure-sensitive adhesive layer 3 do not come into direct contact with each other. Therefore, conveyability of the pressure-sensitive adhesive label 1 can be ensured.

FIG. 6 is a schematic vertical cross-sectional view of a pressure-sensitive adhesive label 1 according to a fourth embodiment of the present invention. The fourth embodiment of the present invention is the same as the first embodiment except that a protective film 5 is provided on an upper surface of the indication layer 2. Thus, hereinafter, the difference from the first embodiment is described mainly.

The pressure-sensitive adhesive label 1 has a configuration in which the protective film 5, the indication layer 2, the pressure-sensitive adhesive layer 3, and the functional layer 4 are laminated. The protective film 5 is a transparent film so that the indication layer 2 can be visually recognized at a time of developing color. The presence of the protective film 5 on the upper surface of the indication layer 2 can enhance scratch resistance, water resistance, and solvent resistance of the indication layer 2 and allows the indication layer 2 to keep a color developing property for a long period of time. This is effective particularly for the case where the indication layer 2 is a thermosensitive color-developing layer.

FIG. 7 is a schematic structural view of a label issuing device 10 according to a fifth embodiment of the present invention. The label issuing device 10 includes a roll paper accommodating part 12 for accommodating the pressure-sensitive adhesive label 1, a roll paper cutting part 13 for cutting the pressure-sensitive adhesive label 1, a label recording part 14 as a recording part for performing recording on the pressure-sensitive adhesive label 1, and a pressure-sensitive adhesiveness exhibiting part 15 for allowing the pressure-sensitive adhesive label 1 to exhibit pressure-sensitive adhesiveness. The roll paper accommodating part 12 accommodates the pressure-sensitive adhesive label 1 rolled into a roll shape. The pressure-sensitive adhesive label 1 has a laminated structure in which the indication layer 2, the pressure-sensitive adhesive layer 3, and the functional layer 4 are laminated. The roll paper cutting part 13 cuts the pressure-sensitive adhesive label 1 sent from conveying rollers 17 as a conveying part to a predetermined length by a cutter member 16. The label recording part 14 performs recording by a recording thermal head 11 on the indication layer 2 of the pressure-sensitive adhesive label 1 placed on a conveying roller 18. As already described in the first to fourth embodiments, the pressure-sensitive adhesiveness exhibiting part 15 heats the functional layer 4 of the pressure-sensitive adhesive label 1 placed on a conveying roller 19 by the thermal head 6 as the heating part H to expose the underlying pressure-sensitive adhesive layer 3.

Here, the thermal head 6 is provided with the heating part H in which a plurality of heat-generating bodies are arranged in parallel, and thus, can form a plurality of openings 8 simultaneously so that the openings 8 are arranged in parallel. Further, the openings 8 can be formed continuously in the conveyance direction of the pressure-sensitive adhesive label 1. Specifically, a required number of openings 8 can be formed at required positions of the pressure-sensitive adhesive label 1. Thus, the position and size of a region in which the pressure-sensitive adhesive label 1 is allowed to exhibit pressure-sensitive adhesiveness can be controlled, and hence, the pressure-sensitive adhesive strength can be exhibited stably.

Further, when the openings 8 are provided in the functional layer 4, a gap is formed between the heating part H of the thermal head 6 and the upper surface of the pressure-sensitive adhesive layer 3 due to the thickness of the functional layer 4 or the convex part 7 formed on the periphery of each opening 8. Therefore, the conveyability of the pressure-sensitive adhesive label 1 can be kept without allowing the pressure-sensitive adhesive layer 3 to adhere to the thermal head 6. Further, the pressure-sensitive adhesive label 1 according to the present invention can exhibit pressure-sensitive adhesiveness by opening the functional layer 4 stably with high sensitivity with low activation energy, which is preferred for configuring a portable label issuing device 10.

A sixth embodiment of the present invention is different from the above-mentioned embodiments in that a low pressure-sensitive adhesive layer having pressure-sensitive adhesive strength lower than that of the pressure-sensitive adhesive layer 3 is formed between the pressure-sensitive adhesive layer 3 and the functional layer 4.

In the pressure-sensitive adhesive label of the first embodiment, pressure-sensitive adhesive strength is obtained by opening the functional layer by heating with the thermal head or the like to expose the underlying pressure-sensitive adhesive layer through the opening. However, the pressure-sensitive adhesive strength of the pressure-sensitive adhesive layer may act as resistance against opening of the functional layer, which may result in the following problems. That is, sufficient openings may not be formed, random cracking and tearing may occur simultaneously with the opening due to the pressure-sensitive adhesion resistance, or further, a piece of the torn functional layer may scatter on the pressure-sensitive adhesive layer to reduce pressure-sensitive adhesive strength. In the sixth embodiment of the present invention, the pressure-sensitive adhesion resistance of the functional layer with respect to the pressure-sensitive adhesive layer is alleviated by providing the low pressure-sensitive adhesive layer between the pressure-sensitive adhesive layer and the functional layer, which is effective for sustained formation of a desired opening with high precision.

The foregoing description has been given by way of example only and it will be appreciated by a person skilled in the art that modifications can be made without departing from the scope of the present invention.

**Claims**

1. A pressure-sensitive adhesive label (1), comprising:

   an indication layer (12);
   a pressure-sensitive adhesive layer (3) placed on the indication layer; and
   a functional layer (4) on the opposite side of the pressure-sensitive adhesive layer to the indication layer,
   wherein the functional layer is openable by heating to expose the pressure-sensitive adhesive layer.

2. A pressure-sensitive adhesive label (1) according to claim 1, wherein the functional layer (4) is made of an olefin-based resin.

3. A pressure-sensitive adhesive label (1) according to claim 1 or 2, wherein the functional layer (4) contains an inorganic filler.

4. A pressure-sensitive adhesive label (1) according to any one of claims 1 to 3, wherein the functional layer (4) comprises a porous layer.

5. A pressure-sensitive adhesive label (1) according to any one of claims 1 to 4, further comprising a low pressure-sensitive adhesive layer having pressure-sensitive adhesive strength lower than pressure-sensitive adhesive strength of the pressure-sensitive adhesive layer (3), the low pressure-sensitive adhesive layer being provided between the pressure-sensitive adhesive layer (3) and the functional layer (4).

6. A pressure-sensitive adhesive label according to any one of claims 1 to 5, wherein the indication layer (2) comprises a thermosensitive color-developing layer.

7. A pressure-sensitive adhesive label (1) according to any one of claims 1 to 6, further comprising a protective film (5) formed on the indication layer (2).

8. A label issuing device (10), comprising:

   a conveying part (12, 17) for conveying a pressure-sensitive adhesive label (1) according to any one of the preceding claims;

a recording part (14) for performing recording on the indication layer; and
a heating part (15) for opening the functional layer (4) by heating to expose the pressure-sensitive adhesive layer (3).

# Fig.1

# Fig.2A

# Fig.2B

# Fig.2C

# Fig.2D

# Fig.3A

# Fig.3B

## Fig.4

## Fig.5A  Fig.5B  Fig.5C  Fig.5D

## Fig.6

# Fig.7

# Fig.8A

# Fig.8B

Fig.9A

60

61

62

63

Fig.9B

61

62

62a    63a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI09111203 B